(19) Europäisches Patentamt
European Patent Office
Office européen des brevets

(11) Veröffentlichungsnummer : **0 351 613 B1**

(12) **EUROPÄISCHE PATENTSCHRIFT**

(45) Veröffentlichungstag der Patentschrift : **16.09.92 Patentblatt 92/38**

(51) Int. Cl.[5] : **B01D 53/34,** C05B 11/06, C05B 11/08

(21) Anmeldenummer : **89112034.7**

(22) Anmeldetag : **01.07.89**

(54) **Verfahren zum Entfernen von NOx aus den bei der Herstellung von Düngemitteln anfallenden Abgasen.**

(30) Priorität : **19.07.88 DE 3824465**

(43) Veröffentlichungstag der Anmeldung : **24.01.90 Patentblatt 90/04**

(45) Bekanntmachung des Hinweises auf die Patenterteilung : **16.09.92 Patentblatt 92/38**

(84) Benannte Vertragsstaaten : **AT BE DE ES FR GB GR IT NL SE**

(56) Entgegenhaltungen : **FR-A- 2 296 603**

(73) Patentinhaber : **BASF Aktiengesellschaft**
**Carl-Bosch-Strasse 38**
**W-6700 Ludwigshafen (DE)**

(72) Erfinder : **Wunder, Rainer, Dr.**
**Am Moenchsbusch 20**
**W-6724 Dudenhofen (DE)**
Erfinder : **Reinhard, Paul, Dr.**
**Nibelungenring 32**
**W-6800 Mannheim 24 (DE)**
Erfinder : **Diehl, Lothar, Dr.**
**Dhauner Strasse 52**
**W-6700 Ludwigshafen (DE)**

**EP 0 351 613 B1**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Vorliegende Erfindung betrifft ein Verfahren zur Entfernung von $NO_x$ aus den Abgasen, die bei der Herstellung von Düngemitteln durch Aufschluß von Rohphosphaten mit Salpetersäure oder Mischungen von Salpetersäure mit Schwefelsäure anfallen.

Beim Aufschluß von Rohphosphaten mit Salpetersäure oder Salpetersäure/Schwefelsäuregemischen (Mixed-Acid-Verfahren) fallen insbesondere in der Aufschlußstufe, aber auch in den nachfolgenden Stufen, in denen die erhaltenen Aufschlußlösungen verarbeitet werden, sofern sie in sauren Bereichen betrieben werden, stickoxidhaltige Abgase unterschiedlicher Konzentration und Menge an, die nicht ohne weiteres an die Umwelt abgegeben werden können.

Für die Entfernung von $NO_x$ aus Abgasen kommen prinzipiell folgende Verfahren zum Einsatz (vgl. Fortschritts-Berichte der VDJ-Zeitschriften Reihe 3, Verfahrenstechnik, Nr. 88, 1984, Seiten 61 bis 68):

1) Katalytische Reduktion, z.B. unter Zusatz von Ammoniak
2) Reduzierende Verbrennung und
3) Absorption in einem Lösungsmittel.

Die unter 1) genannten Verfahren kommen für die Behandlung der in Rede stehenden Abgase nicht in Frage, da diese Abgase Fluorverbindungen enthalten, durch die die Katalysatoren irreversibel geschädigt werden.

Die reduzierende Verbrennung scheidet ebenfalls aus, da Fluorverbindungen nicht abgeschieden werden. Ferner wird der Wertstoff $NO_x$ unter hohem Energieaufwand vernichtet. Aus diesem Grunde sind die Absorptions-Verfahren vorzuziehen, bei denen zumindest ein Teil des $NO_x$ wiedergewonnen und einer Verwertung zugeführt werden kann. Das einfachste denkbare Absorptionsmittel ist Wasser, mit dem das $NO_x$ in Form von Salpetersäure und salpetriger Säure ausgewaschen wird. Letztere muß zu Salpetersäure oxidiert werden, was beispielsweise durch Zugabe von $H_2O_2$ oder Cr(VI)-Verbindungen erfolgt. Bei diesen Verfahren kommt man nur durch sehr großen apparativen Aufwand und hohe Betriebskosten zu verwertbaren Salpetersäurekonzentrationen. Dies gilt sowohl für eine Normaldruckabsorption unter Zusatz von Oxidationsmitteln wie für eine Druckabsorption.

In der DE-A- 25 13 619 wird ein Verfahren zum Entfernen von Stickoxiden aus einem Gasstrom durch Absorption in einer im Kreis geführten 40 bis 65 gew. -%igen Ammoniumnitrat-Lösung beschrieben. Dieses Verfahren besteht aus zumindest 3 Stufen. Der Stickoxide enthaltende Gasstrom wird zunächst in einer ersten Stufe mit einer wäßrigen Ammoniumnitrat-Lösung bei einem pH-Wert zwischen 0,1 und 5, vorzugsweise zwischen 0,5 und 2,0, behandelt. Nach Abtrennen des Gases von der Flüssigkeit wird ersteres in einer zweiten Stufe mit einer Ammoniumnitrat-Lösung der gleichen Konzentration gewaschen, deren pH-Wert zwischen 7,5 und 8,5 liegt. Das Gas wird nach Abtrennung von der Waschlösung in einer dritten Stufe mit Wasser gewaschen. Gemäß einer bevorzugten Ausführungsform wird das Verfahren jedoch in mindestens vier Stufen durchgeführt, und zwar in der Weise, daß die erste Stufe in zwei Stufen aufgeteilt wird. Hierzu wird das Gas im ersten Teil mit einer Ammoniumnitrat-Lösung behandelt, deren pH-Wert zwischen 0,5 und 2,0, während der pH-Wert im zweiten Teil zwischen 0,1 und 1,5 liegen soll. Dieses Verfahren ist jedoch wegen der verschiedenen Waschstufen, in denen mit verschiedenen Waschflüssigkeiten gearbeitet wird, aufwendig, da der pH-Wert der zirkulierenden Ammoniumnitratlösung für jede Waschstufe durch dosierte Zugabe von Salpetersäure oder Ammoniak eingestellt werden muß. Darüber hinaus sind zwischen jeder Waschstufe Zyklonabscheider vorzusehen, um Gas und Waschflüssgkeit voneinander zu trennen und ein Mitreißen von Waschflüssigkeit von einer Waschstufe in die nächste Waschstufe zu verhindern. Etwa in den Waschlösungen anfallendes Nitrit soll durch Behandlung mit Luft zu Nitrat oxidiert werden.

Der vorliegenden Erfindung lag daher die Aufgabe zugrunde, ein Verfahren zum Entfernen von $NO_x$ aus den Abgasen, die bei der Herstellung von Düngemitteln durch Aufschluß von Rohphosphaten mit Salpetersäure anfallen, durch Absorption des $NO_x$ in einer im Kreis geführten Ammoniumnitratlösung bereitzustellen, das die Nachteile der bekannten Verfahren vermeidet und bei dem insbesondere Waschlösungen anfallen, die verwertet werden können.

Es wurde nun gefunden, daß diese Aufgabe dadurch gelöst werden kann, daß man die Absorption in einer einzigen Verfahrensstufe durchführt und die Konzentration der im Kreis geführten Ammoniumnitratlösung, deren Temperatur maximal 40°C beträgt, auf Werte von 5 bis 30 Gew.-% und den pH-Wert durch Zugabe von Ammoniak auf 3 bis 7 hält und in einer der Absorptionsstufe folgenden Regenerationsstufe die Temperatur der Ammoniumnitratlösung auf mindestens 55°C erhöht und die Ammoniumnitratlösung nach Verlassen der Regenerationsstufe wieder auf die Temperatur der Absorptionsstufe abkühlt und zumindest teilweise in diese zurückführt.

Bei dem erfindungsgemäßen Verfahren entsteht in der Waschstufe neben Ammoniumnitrat auch Ammoniumnitrit gemäß folgenden Gleichungen:

$$2\ NO_2 + H_2O \xrightarrow{NH_3} NH_4NO_3 + NH_4NO_2$$

$$NO + NO_2 + H_2O \xrightarrow{NH_3} 2\ NH_4NO_2$$

das in der der Waschstufe folgenden Regenerationsstufe bei erhöhten Temperaturen zu Stickstoff und Wasser zersetzt wird.

Erfindungsgemäß werden die in den Abgasen enthaltenen Stickoxide in einer 5 bis 30 gew.%igen Ammoniumnitratlösung absorbiert. Vorzugsweise setzt man Lösungen mit Konzentrationen von 15 bis 25 Gew.% ein, da bei diesen Konzentrationen der Absorptionsgrad besonders gut ist und man mit besonders kleinen Kolonnen unter sonst gleichen Bedingungen auskommt. Der pH-Wert der im Kreis geführten Ammoniumnitratlösung wird durch Zugabe von Ammoniak auf einem Wert von 3 bis 7 gehalten, d.h. er sollte in der Waschstufe einen Wert von 3 nicht unterschreiten. Bei pH-Werten, die 7 übersteigen, besteht die Gefahr, daß nicht auswaschbare Ammoniumnitrat-Aerosole entstehen, die wiederum nicht ohne weiteres an die Umwelt abgegeben werden können.

Vorzugsweise arbeitet man bei pH-Werten von 5 bis 7. Die Temperatur der Ammoniumnitratlösung in der Waschstufe soll maximal 40°C betragen.

Vorzugsweise arbeitet man jedoch bei tieferen Temperaturen, insbesondere bei Temperaturen von 15 bis 30°C, die man in der Regel ohne besonderen Kühlaufwand durch Wasserkühlung erreichen kann. Selbstverständlich kann man auch tiefere Temperaturen einhalten, die allerdings einen höheren Aufwand erfordern.

Zur Inbetriebnahme der Anlage genügt es, diese mit Wasser zu beschicken, da sich das Ammoniumnitrat beim Zusatz von Ammoniak aus der bei der Absorption entstehenden Salpetersäure ohnehin bildet. Die Behandlung der Gase erfolgt z.B. in Füllkörper-Kolonnen, zweckmäßig im Gegenstrom.

Die die Waschstufe verlassende Ammoniumnitratlösung enthält je nach dem $NO/NO_2$-Molverhältnis der Stickoxide in dem zu behandelnden Abgas mehr oder minder große Mengen (von 1400 bis 3000 mg $NH_4NO_2$/l) an Ammoniumnitrit, die in der folgenden Regenerationsstufe zersetzt werden, wobei es genügt, diese Zersetzung bei Erreichen eines Gehaltes von 200 mg $NH_4NO_2$/l abzubrechen. Die Zersetzung erfolgt am einfachsten durch Erhöhung der Temperatur der Ammoniumnitratlösung auf mindestens 55°C. Vorteilhaft erhöht man die Temperatur auf über 85°C, da die Zersetzung mit steigenden Temperaturen beschleunigt wird. Selbstverständlich kann man die Zersetzung auch oberhalb des Normal-Siedepunktes der Lösung bei erhöhten Drücken vornehmen, wobei man aus apparativen Gründen jedoch Temperaturen von 150°C nicht überschreiten sollte. Die Verweilzeit der Lösung in der Regenerationsstufe hängt von der jeweils eingestellten Temperatur ab. Die Behandlung kann z.B. in einer Strippkolonne durchgeführt werden, in die man Dampf einleitet, durch den die zu regenerierende Waschlösung aufgeheizt und gestrippt wird.

Die Verweilzeit in der Regenerationsstufe kann herabgesetzt werden durch Zugabe von Harnstoff in die Regenerationsstufe, der mit Ammoniumnitrit unter Bildung von Stickstoff, CO2 und Wasser reagiert. Harnstoff wird zweckmäßig in gelöster Form zudosiert, wobei man zweckmäßig soviel Harnstofflösung zusetzt, daß ein Molverhältnis zugeführter Harnstoff : zugeführter Ammoniumnitritmenge von 0,5:1±20 % eingehalten wird. Die Behandlung in der Regenerierstufe kann beispielsweise in einer Behälterkaskade durchgeführt werden. Sofern der Regenerierstufe Harnstoff zugeführt wird arbeitet man vorteilhaft in einem Temperaturbereich von 55 bis 75°C.

Nach Verlassen der Regenerationsstufe wird die Ammoniumnitratlösung wieder auf die Temperatur der Waschstufe abgekühlt und dann in die Waschstufe zurückgeführt, nachdem ein Teil, entsprechend der gebildeten Ammoniumnitratmenge, ausgeschleust und durch Wasser ergänzt worden ist.

Bei dem erfindungsgemäßen Verfahren fallen nach der Regenerationsstufe Ammoniumnitritlösungen an, die weniger als 200 mg/l $NH_4NO_2$ enthalten. Diese Waschlösungen werden zum Teil wieder in die Waschstufe zurückgeführt zum anderen Teil, entsprechend der im System gebildeten $NH_4NO_3$-Menge dem System entzogen. Die anfallenden Ammoniumnitrat-enthaltenden Waschlösungen können vorteilhaft den beim Rohphosphat-Aufschluß erhaltenen Aufschlußlösungen zugesetzt und zusammen mit diesen auf Düngemittel aufgearbeitet werden, so daß ein Teil des beim Aufschluß und in den Folgestufen ausgetriebenen $NO_x$ wieder verwertet wird. Eventuell mit den $NO_x$-haltigen Abgasen ausgetriebene Fluorverbindungen, wie Flußsäure, $SiF_4$ oder $H_2SiF_6$, stören beim erfindungsgemäßen Verfahren nicht, sondern werden mit dem $NO_x$ ausgewaschen und verbleiben in der regenerierten Waschlösung. Bei Rückführung in die Aufschlußlösungen werden sie als umweltunschädliches $CaF_2$ festgelegt. Auf diese Weise erübrigt sich eine gesonderte Abtrennung der genannten flüchtigen Fluorverbindungen.

Die in den Beispielen enthaltenen Prozentangaben bedeuten, falls nichts anderes vermerkt, Gewichtsprozente.

Beispiel 1 (Figur 1)

Durch Leitung (1) wird der Füllkörperkolonne (2) ein Abgas mit einem $NO_x$-Gehalt von 50 g/$Nm^3$ [Oxidationsgrad 85-90 % (unter Oxidationsgrad wird das Volumenverhältnis in % an Stickoxidverbindungen mit einer Oxidationszahl $\geq 3$ (im wesentlichen $NO_2$ und $HNO_3$) zu den Gesamtstickoxiden verstanden] zugeführt und dort im Gegenstrom mit einer 15 %igen Ammoniumnitratlösung bei einer Temperatur von 25°C gewaschen. Die Füllkörperschütthöhe beträgt 10 m, aufgeteilt auf 2 Schüttungen von je 5 m. Der Kolonnendurchmesser ist so bemessen, daß je $m^2$ freien Querschnitts 1600 $m^3$/h Abgas durchgesetzt werden können.

Am Kolonnenkopf werden je $m^3$ Abgas 20 l einer 15 %igen Ammoniumnitrat-Lösung aufgegeben, deren pH-Wert mittels Ammoniak, das durch Leitung (3) in den Waschkreislauf eingeführt wird, auf 7 eingestellt wird. Der die Kolonne durch Leitung (4) verlassende Gasstrom weist einen $NO_x$-Gehalt von <1500 mg/$Nm^3$ auf und kann in einer gleichartigen, in der Figur nicht veranschaulichten Waschstufe, weiter auf <500 mg/$Nm^3$ abgesenkt werden.

Die am Boden der Kolonne durch Leitung (5) ablaufende Waschlösung hat einen pH-Wert von $\leq 3$ und enthält $\leq 3000$ mg $NH_4NO_2$/l sowie 165 g $NH_4NO_3$/l. Die Lösung wird in Wärmeaustauscher (6) auf 70°C erwärmt und der Strippkolonne (7) zugeführt, in der eine Temperatur von 100°C durch Einleiten von Dampf durch Leitung (8) eingehalten wird. Das am Kopf der Kolonne durch Leitung (9) entweichende, Stickoxide enthaltende Gas kann nach Zugabe von Luft zur Oxidation durch Leitung (10) mit dem frisch zu behandelnden Gas vereinigt und durch Leitung (1) der Waschkolonne (2) zugeführt werden.

Die am Fuß der Strippkolonne (7) durch Leitung (11) abgezogene regenerierte Waschflüssigkeit wird wieder in die Waschkolonne zurückgeführt, nachdem ihr pH-Wert durch Zugabe von Ammoniak durch Leitung (3) auf 7 eingestellt worden ist. Einen Teil ihrer Wärme gibt sie im Wärmeaustauscher (6) an die zu regenerierende Waschflüssigkeit ab und wird im Wärmeaustauscher (12) auf die Eingangstemperatur von 25°C weiter abgekühlt. Durch Leitung (13) kann ein Teil der regenerierten Waschlösung, entsprechend der gebildeten $NH_4NO_3$-Menge, abgezogen und beispielsweise der salpetersauren Rohphosphat-Aufschlußlösung zugesetzt werden. Das hierbei aus dem System ausgeschleuste Wasser kann durch Leitung (14) ergänzt werden.

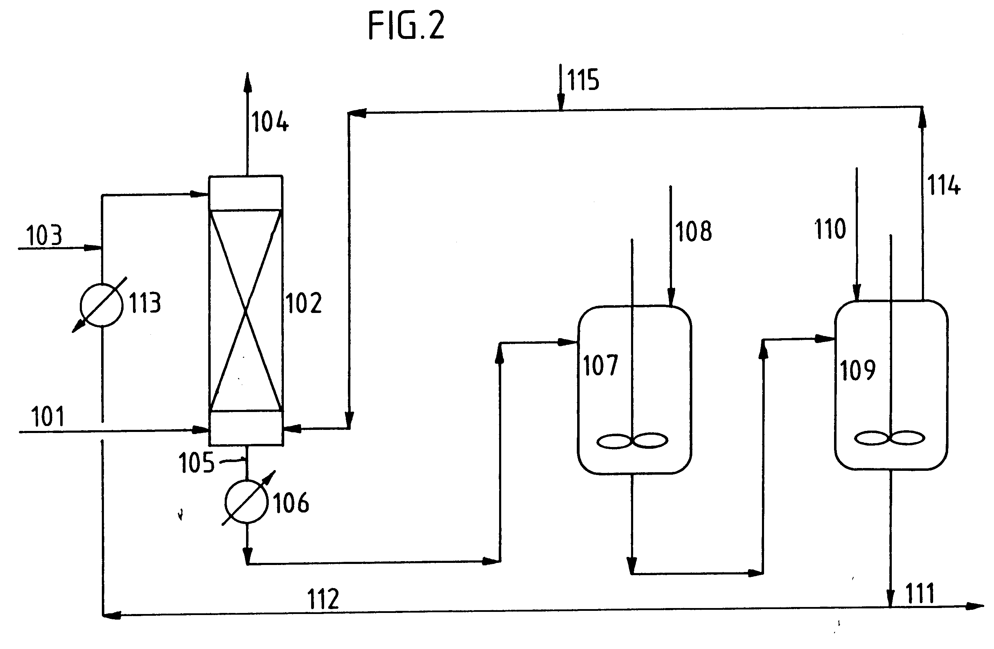

Beispiel 2 (Figur 2)

Wie in Beispiel 1 beschrieben, wird ein durch Leitung (101) zugeführtes Abgas in der Füllkörperkolonne (102) mit einer 15 %igen Ammoniumnitratlösung, deren pH-Wert durch Zugabe von Ammoniak durch (103) auf pH = 7 gehalten wird, im Gegenstrom gewaschen. Durch (104) tritt ein Abgasstrom aus mit einem $NO_x$-Gehalt von < 1500 mg/$Nm^3$.

Die mit $\leq 3000$ mg $NH_4NO_2$/l beladene Waschlösung wird im Kolonnenboden durch Leitung (105) abgezogen und im Wärmeaustauscher (106) auf 60°C erwärmt. Die Lösung gelangt in den ersten Rührreaktor (107), dem pro Liter zugeführte Waschlösung 0,9 g Harnstoff in Form einer 50 %igen wäßrigen Lösung durch Leitung (108) zugeführt werden ($\sim$ 0,35 Mol Harnstoff/Mol $NH_4NO_2$). Nach einer durchschnittlichen Verweilzeit von 30 min gelangt die Lösung in den zweiten Rührreaktor (109), wo der Lösung weitere 0,4 g Harnstoff pro Liter Lösung ($\sim$ 0,15 Mol Harnstoff/Mol $NH_4NO_2$) in Form einer 50 %igen wäßrigen Lösung durch Leitung (110) zugegeben werden. Nach einer Verweilzeit von 60 min im zweiten Rührreaktor wird die Lösung aus dem Reaktor mit einem Gehalt von 200 mg $NH_4NO_2$/l abgezogen.

Durch Leitung (111) kann ein Teil der regenerierten Waschlösung dem System entnommen werden, der Rest wird durch Leitung (112) nach Kühlung im Kühler (113) und Einstellung eines pH-Wertes von 7 durch Ammoniakzugabe durch Leitung (103) wieder in die Waschkolonne zurückgeführt.

Analog wie in Beispiel 1 beschrieben werden die die Regenerationsstufe durch Leitung (114) verlassenden Abgase nach Zugabe von Luft durch Leitung (115) wieder in die Waschkolonne (102) zurückgeführt.

## Patentansprüche

1. Verfahren zum Entfernen von $NO_x$ aus den Abgasen, die bei der Herstellung von Düngemitteln durch Aufschluß von Rohphosphaten mit Salpetersäure anfallen, durch Absorption des $NO_x$ in einer im Kreis geführten Ammoniumnitratlösung, dadurch gekennzeichnet, daß man die Absorption in einer einzigen Verfahrensstufe durchführt und die Konzentration der im Kreis geführten Ammoniumnitratlösung, deren

Temperatur maximal 40°C beträgt, auf Werte von 5 bis 30 Gew.% und den pH-Wert durch Zugabe von Ammoniak auf 3 bis 7 hält und in einer der Absorptionsstufe folgenden Regenerationsstufe die Temperatur der Ammoniumnitratlösung auf mindestens 55°C erhöht und die Ammoniumnitratlösung nach Verlassen der Regenerationsstufe wieder auf die Temperatur der Absorptionsstufe abkühlt und zumindest teilweise in diese zurückführt.

**2.** Verfahren nach Anspruch 1, dadurch gekennzeichnet, daß man die Konzentration der im Kreis geführten Waschlösung auf 15 bis 25 Gew.% hält.

**3.** Verfahren nach Ansprüchen 1 bis 2, dadurch gekennzeichnet, daß man die Temperatur der Waschlösung in der Waschstufe auf unter 30°C hält.

**4.** Verfahren nach Ansprüchen 1 bis 3, dadurch gekennzeichnet, daß der pH-Wert der Ammoniumnitratlösung auf Werte von 5 bis 7 gehalten wird.

**5.** Verfahren nach Ansprüchen 1 bis 4, dadurch gekennzeichnet, daß man die Temperatur der Ammoniumnitratlösung in der Regenerationsstufe auf mindestens 85°C erhöht.

**6.** Verfahren nach Ansprüchen 1 bis 4, dadurch gekennzeichnet, daß man der Ammoniumnitratlösung in der Regenerationsstufe Harnstoff zusetzt.

**7.** Verfahren nach Anspruch 6, dadurch gekennzeichnet, daß man die Temperatur in der Regenerationsstufe auf 55 bis 70°C hält.

## Claims

**1.** A process for removing $NO_x$ from the waste gases obtained in the production of fertilizers by digesting crude phosphates with nitric acid, by absorption of NOx in a circulated ammonium nitrate solution, wherein the absorption is carried out in a single process stage and the concentration of the circulated ammonium nitrate solution, whose temperature is not more than 40°C, is kept at from 5 to 30% by weight and the pH is kept at from 3 to 7 by adding ammonia, and, in a regeneration stage downstream of the absorption stage, the temperature of the ammonium nitrate solution is increased to 55°C or more and the ammonium nitrate solution, after leaving the regeneration stage, is cooled again to the temperature of the absorption stage and some or all of this ammonium nitrate solution is recycled to this stage.

**2.** A process as claimed in claim 1, wherein the concentration of the circulated wash solution is kept at from 15 to 25% by weight.

**3.** A process as claimed in claim 1 or 2, wherein the temperature of the wash solution in the wash stage is kept below 30°C.

**4.** A process as claimed in claim 1 or 2 or 3, wherein the pH of the ammonium nitrate solution is kept at from 5 to 7.

**5.** A process as claimed in claim 1 or 2 or 3 or 4, wherein the temperature of the ammonium nitrate solution in the regeneration stage is increased to 85°C or more.

**6.** A process as claimed in claim 1 or 2 or 3 or 4, wherein urea is added to the ammonium nitrate solution in the regeneration stage.

**7.** A process as claimed in claim 6, wherein the temperature in the regeneration stage is kept at from 55 to 70°C.

## Revendications

1.- Procédé pour l'élimination de $NO_x$ dans les gaz résiduaires qui sont formés au cours de la fabrication

d'engrais par attaque de phosphates naturels par de l'acide nitrique, par absorption de $NO_x$ dans une solution de nitrate d'ammonium circulant en circuit fermé, caractérisé en ce qu'on procède à l'absorption dans un seul étage opératoire, on maintient à des valeurs de 5 à 30% en poids la concentration de la solution de nitrate d'ammonium qui circule en circuit fermé et dont la température s'élève au miximum à 40°C et on maintient le pH à une valeur de 3 à 7 par addition d'ammoniac, et en ce que dans un étage de régénération, qui fait suite à l'étage d'absorption, on élève à 55°C au moins la température de la solution de nitrate d'ammonium, on refroidit la solutuion de nitrate d'ammonium, après qu'elle a quitté l'étage de régénération, à la température de l'étage d'absorption et on la renvoie au moins en partie dans ce dernier.

2.- Procédé selon la revendication 1, caractérisé en ce qu'on maintient à 15-25% en poids la concentration de la solution de lavage qui circule en circuit fermé.

3.- Procédé selon la revendication 1 ou 2, caractérisé en ce qu'on maintient au-dessous de 30°C la température de la solution de lavage dans l'étage de lavage.

4.- Procédé selon l'une quelconque des revendications 1 à 3, caractérisé en ce que le pH de la solution de nitrate d'ammonium est maintenu à des valeurs de 5 à 7.

5.- Procédé selon l'une quelconque des revendications 1 à 4, caractérisé en ce qu'on élève à 85°C au moins la température de la solution de nitrate d'ammonium dans l'étage de régénération.

6.- Procédé selon l'une quelconque des revendications 1 à 4, caractérisé en ce qu'on ajoute de l'urée à la solution de nitrate d'ammonium dans l'étage de régénération.

7.- Procédé selon la revendication 6, caractérisé en ce qu'on maintient entre 55 et 70°C la température dans l'étage de régénération.

FIG.1

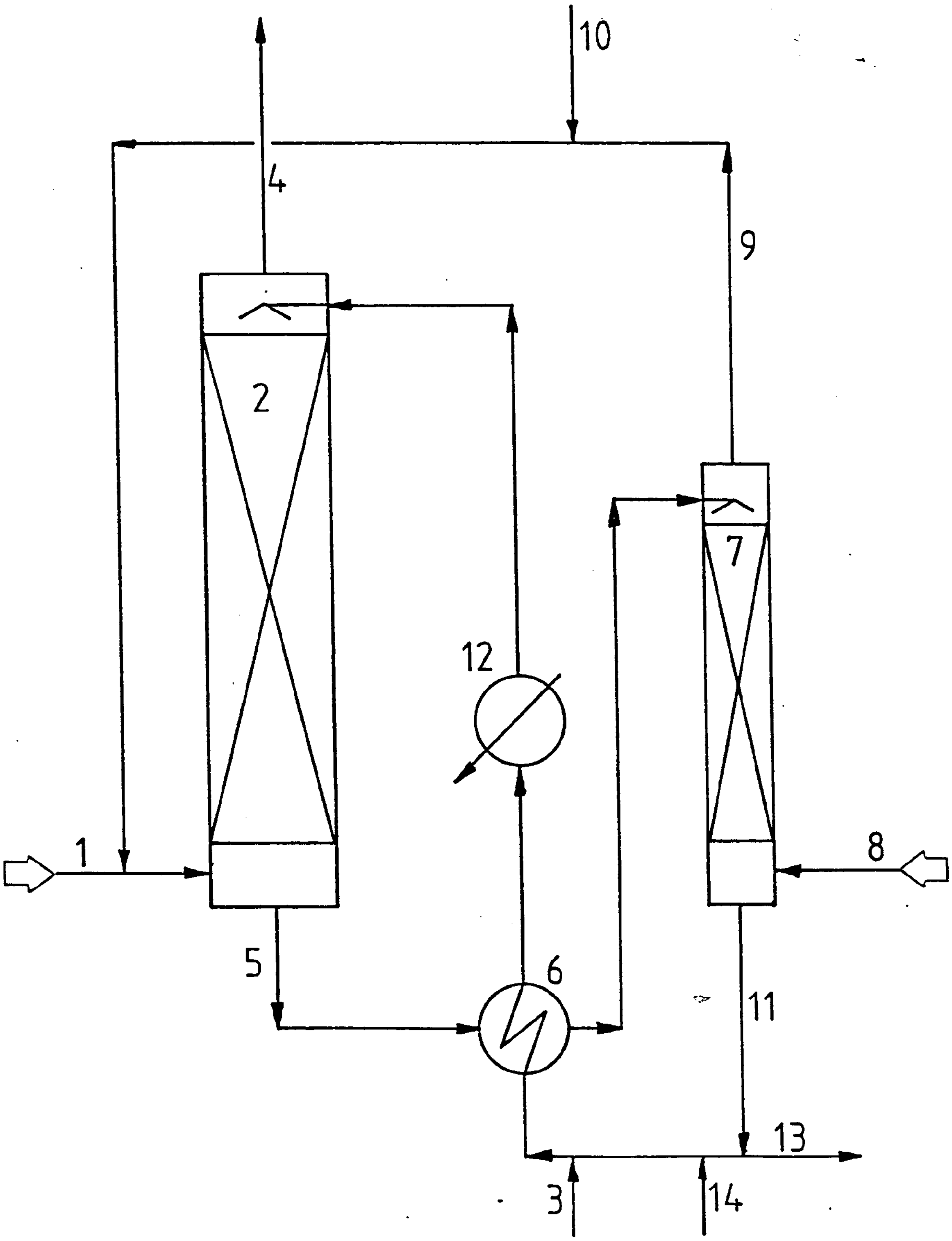

FIG.2